# EUROPEAN PATENT APPLICATION

(11) **EP 1 427 138 A2**
(43) Date of publication of application: **09.06.2004**
(21) Application number: 03027443.5
(22) Date of filing: 01.12.2003
(51) Int. Cl.: H04L 12/26, H04L 12/24

(54) **System and method for acquisition, storage and delivery of communications usage data from communications resources**

(30) Priority: 05.12.2002 GB 0228370
(71) Applicant: BTS Holdings PLC, Wallington, Surrey SM6 0DD (GB)
(72) Inventor: Chopra, Subhash, Sanderstead Surrey CR2 0RU (GB); Kendall, Jon, Redhill Surrey RH1 6EQ (GB); Balestrini, Dick, Cove Farnborough Hampshire GU14 9PH (GB)
(74) Representative: Downing, Michael Philip

(57) **Abstract**

A data acquisition, storage and delivery system comprising a networked computing means on which is provided an acquisition agent with access to usage data (log files, databases, real-time status information, alarms etc) from a plurality of communications resources (arranged to produce communications usage data), a storage agent arranged to retain the usage data from the plurality of communications resources, and a delivery agent that delivers the usage data, in various ways, to a variety of subscribing management systems. A database is preferably provided to hold configuration information for the acquisition, storage and delivery agents. Suitable communications resources include PBX telephone systems, IP telephony systems, email servers, proxy servers, firewalls, routers, web servers, mobile telephony and other emerging media.

## Description

### FIELD OF THE INVENTION

The present invention relates to a system and method for the acquisition and storage of communications usage data from a plurality of communications resources and delivery, in various ways, of the data to a variety of subscribing management systems.

### BACKGROUND ART

Modern communications resources come in a variety of forms - telephone, facsimile, email, web and so on. Most organisations use some or all of these media and need to ensure that they are used effectively. Therefore usage data must be gathered from a plurality of communications resources, and delivered to a variety of subscribing management systems.

### SUMMARY OF THE INVENTION

The present invention therefore provides a networked computing means comprising a data acquisition agent with access to usage data (log files, databases, real-time status information, alarms etc) from a plurality of non-like communications resources (arranged to produce communications usage data), a storage agent to retain the communications usage data, and a delivery agent to transfer the communications usage data, in various ways, to a variety of subscribing management systems.

Suitable communications resources include PBX telephone systems, IP telephony systems, email servers, proxy servers, firewalls, switches, routers and web servers and mobile telephony and emerging media such as video conferencing systems etc.

An at least semi-permanent data link from the network to a variety of subscribing management systems will enable the delivery agent to transfer the communications usage data obtained from communications resources to these systems. The data link can be the Internet or a dial-up connection.

Thus, the present invention provides a communications data acquisition, storage and delivery system which, in preferred embodiments, can gather usage data from a plurality of communications resources, store the data and deliver data, in various ways, to a variety of subscribing management systems.

A database is preferably provided in a form accessible to the acquisition agent, storage agent and delivery agent that holds configuration information about the communications resources from which data is to be acquired, the storage options and the delivery requirements for the subscribing systems.

### BRIEF DESCRIPTION OF THE DRAWINGS

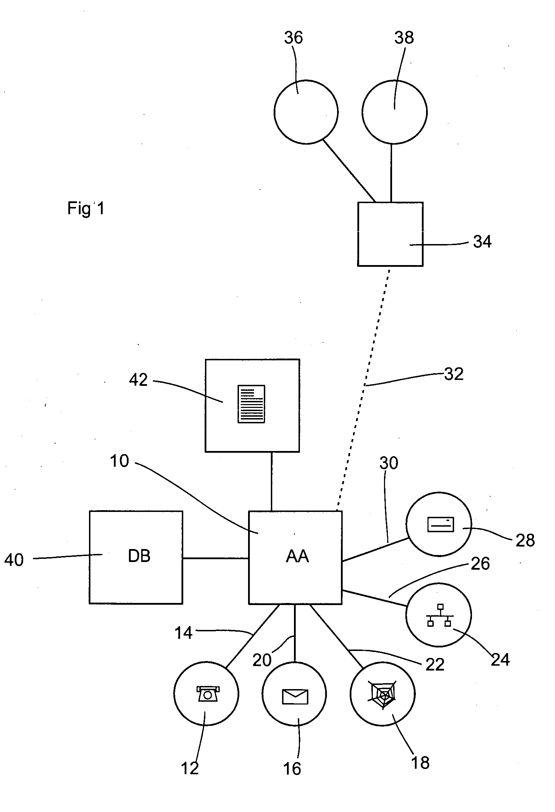

An embodiment of the present invention will now be described by way of example, with reference to the accompanying figure 1 which is a logical diagram of the layout of the system

### DETAILED DESCRIPTION OF THE EMBODIMENT

Public and private sector organisations are becoming increasingly dependent on communications. This means that monitoring of communications resources is becoming more important. This embodiment provides a system and method to acquire and store communications usage data from a plurality of communications resources and to deliver this data, in various ways, to a variety of subscribing management systems.

### System Areas

The system can reside either on an existing server (or servers), on a dedicated PC (or PCs), or on a dedicated embedded device (or devices). The following are the principal system areas, described with reference to figure 1.

### Data Acquisition

The system includes an acquisition agent, which gathers usage data on communications activities by monitoring communications resources.

The system maintains a database of the communications resources from which it needs to acquire data. This database includes the communication resource type, the format of the usage data (log file, database, real-time output etc), details of the communications protocol to be used, usernames and passwords etc.

The acquisition agent described is arranged to monitor the following types of communications resources. The skilled person will realise that other resources could likewise be monitored.

### Telephone System

When a call is made or received, a record of the call is created by the telephone system 12. This record is captured via a serial interface port 14 or over the LAN (Local Area Network) using TCP/IP. Both traditional PBXs (Private Branch Exchanges) and PBX networks are monitored, as well as more recent IP-based PBX solutions.

### Email System

When an email is sent or received, a record is created and stored on the email server 16. The acquisition agent accesses this record via a local network link 20.

### Proxy Server / Firewall / Switch / Router

When the Internet is accessed, records are created and stored on the proxy server, firewall, switch or router 18. The acquisition agent accesses these records via a local network link 22.

### Web Server (Internet & Intranet)

When a web server is accessed, records are created and stored on the server 24. The acquisition agent accesses these records via a local network link 26.

### Mobile Telephony

When a call is made or received by a mobile phone, the mobile service provider creates a record of the communication. This record can be provided on-line and the acquisition agent can access it.

### Data Storage

The system includes a storage agent which stores the data acquired from the communications resources. Data is retained for a configurable period of time depending on the delivery method to be used. For immediate data delivery, data is only retained in the event that the communications link fails. For polled data delivery, the data is retained until the remote system retrieves it. For push data delivery, the data is retained until the push threshold (time and/or data size) is reached. The system maintains a database of these data storage parameters.

### Data Delivery

The system includes a delivery agent which transfers the data to a variety of management systems. The data delivery system currently supports the following methods:
- Immediate - Data is forwarded to the subscribing management systems immediately it is received by the acquisition agent. Protocols supported include TCP/IP, Dial-up, and Serial.
- Polled - Data is forwarded to the subscribing management systems when each management system contacts the delivery agent and requests the data. Protocols supported include TCP/IP, FTP, Email, Dial-up, Serial, and Zmodem.
- Push - Data is forwarded to the subscribing management systems when a threshold (time and/or data size) is reached. Protocols supported include TCP/IP, FTP, Email, Dial-up, Serial, and Zmodem.

The system maintains a database of the management systems to which it needs to send data. This database includes a list of subscribing systems, the delivery method, details of the communications protocol to be used, usernames and passwords etc.

Other delivery methods and protocols may emerge in the future.

The system can also provide status information on its performance and the volume of data gathered from the various sources. It is Internet-enabled and can be remotely upgraded and configured.

The system provides a comprehensive set of web-based tools to allow system administrators to maintain its configuration information.

### Remote Sites

Many staff work away from the principal site or sites of an organisation. To cater for this, the system includes an at least semi-permanent data link 32 from the network to enable the system to obtain data from communications resources elsewhere 36, 38. The data link 32 can be the Internet or a dial-up connection. Alternatively a number of acquisition, storage and delivery systems may be deployed at remote locations.

## Claims

1. A data acquisition, storage and delivery system, comprising a networked computing means on which is provided:
- an acquisition agent with access to usage data from a plurality of non-like communications resources;
- a storage agent arranged to store communications usage data from the plurality of communications resources; and
- a delivery agent arranged to deliver communications usage data to a subscribing management system.

2. A data acquisition, storage and delivery system according to claim 1 in which the communications resources are selected from the group consisting of PBX telephone systems, IP telephony systems, email servers, proxy servers, firewalls, switches, routers, web servers, mobile telephony and other emerging media.

3. A data acquisition, storage and delivery system according to claim 1 or claim 2 in which the usage data is retained for a configurable period of time.

4. A data acquisition, storage and delivery system according to claim 1 or claim 2 in which the usage data is retained up to a configurable data file size.

5. A data acquisition, storage and delivery system according to any one of the preceding claims in which the usage data is retained when the communications link fails.

6. A data acquisition, storage and delivery system according to any one of claims 1 to 4 in which the usage data is delivered immediately to the subscribing management systems.

7. A data acquisition, storage and delivery system according to any one of claims 1 to 4 in which the usage data is polled by the subscribing management systems.

8. A data acquisition, storage and delivery system according to any one of claims 1 to 4 in which the usage data is pushed to the subscribing management systems when a threshold is reached.

9. A data acquisition, storage and delivery system according to any one of the preceding claims in which the usage data includes log files, databases, real-time status information, and/or alarms.

10. A data acquisition, storage and delivery system according to any one of the preceding claims including an at least semi-permanent data link from the network to a further communications resource.

11. A communications management system according to claim 10 in which the at least semi-permanent data link is the Internet.

12. A communications management system according to claim 10 in which the at least semi-permanent data link is a dial-up connection.
